# EUROPÄISCHE PATENTSCHRIFT

(11) **EP 1 127 299 B1**
(45) Veröffentlichungstag und Bekanntmachung des Hinweises auf die Patenterteilung: **20.08.2003**
(21) Anmeldenummer: 99957925.3
(22) Anmeldetag: 20.10.1999
(51) Int. Cl.: G05B 19/042

(54) **AUTOMATISIERUNGSSYSTEM UND VERFAHREN ZUM ZUGRIFF AUF DIE FUNKTIONALITÄT VON HARDWAREKOMPONENTEN**
AUTOMATION SYSTEM AND METHOD FOR ACCESSING THE FUNCTIONALITY OF HARDWARE COMPONENTS
SYSTEME D'AUTOMATISATION ET PROCEDE POUR ACCEDER A LA FONCTIONNALITE DE COMPOSANTS DE MATERIEL

(30) Priorität: 02.11.1998 DE 19850469
(43) Veröffentlichungstag der Anmeldung: 29.08.2001
(73) Patentinhaber: SIEMENS AKTIENGESELLSCHAFT, 80333 München (DE)
(72) Erfinder: GEHRING, Hubert, D-90453 Nürnberg (DE); KÖRZDÖRFER, Horst, D-91056 Erlangen (DE); TALANIS, Thomas, D-91336 Heroldsbach (DE); ZEBISCH, Thomas, D-91056 Erlangen (DE)
(86) Internationale Anmeldenummer: DE9903364
(87) Internationale Veröffentlichungsnummer: WO00026731

(56) Entgegenhaltungen:
- EP-A- 0 488 178
- EP-A- 0 825 740
- WO-A-97/16771
- WO-A-97/39393
- WO-A-97/49028
- US-A- 5 805 442
- SCHMOLL J: "WIRD OLE FOR PROCESS CONTROL (OPC) EIN NEUER INDUSTRIESTANDARD?" , AUTOMATISIERUNGSTECHNISCHE PRAXIS - ATP,DE,OLDENBOURG VERLAG. MUNCHEN, VOL. 39, NR. 5, PAGE(S) 11-12,14-17 XP000689324 ISSN: 0178-2320 Absätze [0001],[0004]; Abbildungen 1-3
- CHIP P: "DCOM: MICROSOFT ENHANCES DCE" , BYTE,US,MCGRAW-HILL INC. ST PETERBOROUGH, VOL. 23, NR. 3, PAGE(S) 47-48 XP000773962 ISSN: 0360-5280

## Beschreibung

Die Erfindung betrifft ein Automatisierungssystem mit über mindestens ein Bussystem koppelbaren Hardwarekomponenten, insbesondere Motoren, Sensoren, Aktuatoren, etc..

Die Erfindung betrifft weiter ein Verfahren zum Zugriff auf die Funktionalität von derartigen Hardwarekomponenten.

Ein derartiges Automatisierungssystem besteht beispielsweise aus Motoren, Sensoren, etc., die beispielsweise im Zusammenspiel mit einer oder mehreren übergeordneten Steuerungen einen automatischen Produktionsprozeß bilden. Für die Ansteuerung der Hardwarekomponenten ist dabei in der Regel eine spezielle zwischen Steuerung und Hardwarekomponente zwischengeschaltete Abstraktionshülle erforderlich, die die Vermittlung der Steuerungsbefehle zwischen Steuerungsvorrichtung und Hardwarekomponente übernimmt. Bei einem Austausch von Hardwarekomponenten bzw. bei einer Ergänzung ist somit neben Änderungen der Hardwarekomponenten selbst in der Regel auch eine Änderung bzw. Anpassung der Steuerungsvorrichtung beispielsweise in Bezug auf Steuerungsprogramme etc. erforderlich.

Aus WO-A-97 16771 ist es bekannt, daß zur Kommunikation in einem Druck- oder Kopiergerät ein einheitliches Bussystem eingesetzt wird, wobei jede Funktionseinheit des Geräts über eine Schnittstelle mit dem Bussystem verbunden ist und jede Schnittstelle vorzugsweise eine Speichereinheit enthält, in der Daten und Nachrichten, die bestimmten Funktionseinheiten zugeordnet sind, gespeichert werden.

Aus EP-A-0 488 178 ist die Struktur und der Einsatz eines privaten Bussystems zur Steuerung von Hausgeräten bekannt, bei dem Raumüberwachungsgeräte, an die Wiederum elektrische Geräte angeschlossen sind, über das private Bussystem an ein zentrales Sichtkontrollgerät angebunden sind, über welches vom Benutzer die elektrischen Geräte gesteuert werden.

Aus EP-A-825 740 ist eine Schaltungsanordnung offenbart, die den Anschluß unterschiedlicher Hausgeräts sowie den Anschluß nicht festinstalliartet Geräte ermöglicht, ohne daß es erforderlich ist, manuell Befehle in das Steuerungssystem einzugeben, die eine Aktivierung bzw. Wirkintegration der Geräte im System initiieren.

Aus WO-A-97 39393 ist bekannt, daß es zur Steuerung und Datenaufbereitung einer industriellen Anlage zweckmäßig sein kann zwischen einzelnen, auch an unterschiedlichen Standorten betriebenen Netzwerk-basierenden Controllern, auch NBC genannt, einen Kommunikationsbus auszubilden, über den Datenpakete zwischen den NBCs direkt ausgetauscht werden können und auch ein direkter Zugriff auf Speicherbereiche eines anderen NBC möglich ist.

Aus Schmol J, Wird OLE FOR PROCESS CONTROL, ATP 39, Nr.5, S. 11-12, ist bekannt, daß aufbauend auf der Windowsbasierten Technologie von u.a. DCOM ein einheitliches Zugriffsverfahren und eine einheitliche Schnittstelle zwischen Anwendungsprogrammen aus dem industriellen Bereich und dem Bürobereich auf der einen Seite und der Automatisierungsebene, beispielsweise Automatisierungssysteme, Feldgeräte, auf der anderen Seite durch die "OLE for Process Control"-, abgekürzt OFC, Spezifikation realisiert werden soll.

Der Erfindung liegt die Aufgabe zugrunde, auf einfache Weise eine offene und flexible Betriebsweise des Systems zu erzielen. Insbesondere sollen dabei Hardwarekomponenten ohne Änderungen der Steuerprogramme austauschbar sein.

Diese Aufgabe wird durch ein Automatisierungssystem bzw. durch ein Verfahren mit den in den Ansprüchen 1 bis 12 angegebenen Merkmalen gelöst.

Die Erfindung geht von der Erkenntnis aus, daß es für eine Realisierung der Hardwarekomponenten als "plug and play"-Module erforderlich ist, direkt in der Hardwarekomponente einen speziellen Baustein vorzusehen, auf dem die Funktionsobjekte als Zugang zur Funktionalität der Hardwarekomponenten ablauffähig sind. Dieser spezielle Baustein ist in Form der Systemverbindungseinheit realisiert. Die Systemverbindungseinheit ist mit einem Bussystem des Automatisierungssystems gekoppelt, so daß Kommunikationsdaten beispielsweise von einem Leitsystem zur Hardwarekomponente wie auch von und zu sämtlichen mit dem Bussystem gekoppelten weiteren Komponenten übertragen werden können. Hierdurch können spezielle zwischen einem Leitsystem und den Hardwarekomponenten bisher erforderliche Vermittlungsobjekte entfallen. Darüber hinaus verringert sich durch die Einsparung derartiger als Hardware oder Software vorliegender Vermittlungsobjekte auch die Fehlerhäufigkeit, da die Systemverbindungseinheit im wesentlichen auf Softwareobjekten beruht. Hierdurch wird auch bei einem Austausch einer Hardwarekomponente sowie auch im Betriebsfall eine aktuelle und dynamische Abfrage zur Konfiguration des Automatisierungssystems möglich. Darüber hinaus besteht über die Systemverbindungseinheit jederzeit eine direkte Verbindung zur Funktionalität der Hardwarekomponenten.

Eine Konfiguration oder ein Zugriff auf die bestehenden Hardwarekomponenten des Automatisierungssystems kann in vorteilhafter Weise derart realisiert werden, daß das Automatisierungssystem ein Leitsystem und/oder ein Bedien- und Beobachtungssystem zum Zugriff auf die Funktionsobjekte aufweist.

Die Nutzung der aus der Bürowelt bekannten Mechanismen zur Ausführung von verteilten Anwendungen kann dadurch erfolgen, daß die Funktionsobjekte als DCOM-Objekte ausgebildet sind. DCOM (Distributed Component Object Model) ist ein Mechanismus, der es ermöglicht, über mehrere Computer in einem Netzwerk verteilte Anwendungen auszuführen. Eine verteilte Anwendung kann dabei aus mehreren Prozessen bestehen, die zusammenarbeiten, um eine Aufgabe auszuführen. Diese Prozesse können dabei auf einem oder mehreren Rechnern oder Systemverbindungseinheiten ausgeführt werden.

Die Einbettung der den Hardwarekomponenten zugeordneten Systemverbindungseinheiten in ihre Umgebung kann dadurch erfolgen, daß die Funktionsobjekte mindestens ein erstes Funktionsobjekt zur Erzeugung einer minimalen Funktionalität einer Hardwarekomponente, mindestens ein zweites Funktionsobjekt zur Verschaltung von Funktionsobjekten und mindestens ein drittes Funktionsobjekt zur Auflistung von in der Systemverarbeitungseinheit und/oder auf entfernten Systemverarbeitungseinheiten und/oder entfernten Rechnern vorhandenen Funktionsobjekten enthalten.

Ein sogenanntes Verknüpfungsobjekt kann dadurch geschaffen werden, daß das zweite Funktionsobjekt zur Beeinflussung von Verbindungen zwischen den auf entfernten Systemverbindungseinheiten und/oder auf entfernten Rechnern vorhandenen Funktionsobjekten vorgesehen ist.

Ein störungsfreier Zugriff auf die Hardwarekomponenten ohne die Notwendigkeit von Synchronisierungsmaßnahmen kann dadurch sichergestellt werden, daß durch das dritte Funktionsobjekt beim Zugriff auf die Systemverbindungseinheit ein dynamisches Abfrageobjekt generiert wird. Die Besonderheit dieses Abfrageobjekts besteht darin, die Summe der Funktionalität des Systems zu enumerieren.

Eine einfache und wirkungsvolle Möglichkeit zur Bereitstellung von Codierungsmitteln wird dadurch erreicht, daß das Automatisierungssystem eine ladbare Tabelle mit Codierungsvorschriften aufweist. Hierdurch wird auch eine sogenannte Marshaling-Funktion der Funktionsobjekte erzielt.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Automatiserungssystems mit verteilten Objekten,
- FIG 2: ein weiteres Ausführungsbeispiel eines Automatisierungssystems mit mehreren Bussystemen,
- FIG 3: eine schematische Darstellung für den Aufbau einer Systemverbindungseinheit einer Hardwarekomponente und
- Figur 4: ein abstraktes Geräteobjektmodell.

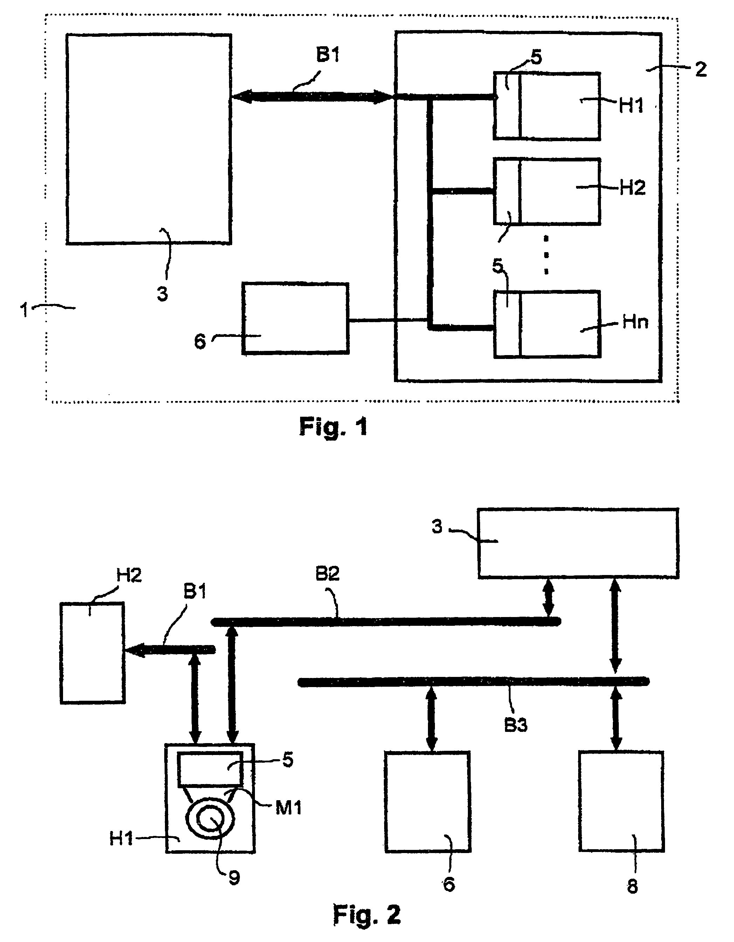

Figur 1 zeigt ein Blockschaltbild eines Automatisierungssystems 1. Das Automatisierungssystem 1 besteht aus einem Leitsystem 3, welches über ein Bussystem B1 mit einer Vielzahl von Hardwarekomponenten H1..Hn gekoppelt ist. Mit dem Bussystem B1 ist weiterhin ein Bedien- und Beobachtungssystem 6 gekoppelt. Jede Hardwarekomponente H1..Hn weist eine Systemverbindungseinheit 5 auf, die jeweils mit dem Bussystem B1 gekoppelt ist.

Zentraler Bestandteil des in Figur 1 dargestellten Automatisierungssystems 1 ist die Systemverbindungseinheit 5, die der Kommunikation der Hardwarekomponenten H1..Hn innerhalb des Automatisierungssystems 1 sowie zur Abbildung der jeweiligen Funktionalität der Hardwarekomponenten H1..Hn, d.h. zur Erzeugung von Repräsentanten hierfür dient. Hierzu weist die Systemverbindungseinheit 5 ein minimales gemeinsames Interface auf, welches eine für alle Hardwarekomponenten H1..Hn vorgegebene Identifizierung enthält und hierdurch von einen externen Kommunikationspartner, beispielsweise vom Leitsystem 3 auch ohne Kenntnis über das eigentliche Gerät, d.h. über die eigentliche Hardwarekomponente H1..Hn angesprochen werden kann. Durch die Systemverbindungseinheit 5 kann vom jeweiligen Ansprechpartner der Hardwarekomponente H1..Hn nach Aufnahme einer Kommunikation weiteres Wissen über die jeweilige Hardwarekomponente H1..Hn erlangt werden. Mit Hilfe der Systemverbindungseinheit 5 wird es somit möglich, Hardwarekomponenten H1..Hn ohne Änderung der bestehenden Strukturen des Automatisierungssystems 1 zu ersetzen, zu ergänzen etc.. Darüber hinaus entfallen aufgrund der direkten Kommunikation eines übergeordneten Leitsystems mit der in der Hardwarekomponente H1..Hn angeordneten Systemverbindungseinheit 5 ansonsten erforderliche dazwischengeschaltete Abstraktionshüllen. Insgesamt führt das in Figur 1 dargestellte Grundprinzip von Hardwarekomponenten H1..Hn mit integrierter Systemverbindungseinheit 5 dazu, daß das Automatisierungssystem 1 offen und flexibel betrieben werden kann. Dies wird im folgenden auch mit dem Schlagwort "offene/verteilte Automatisierung" bezeichnet werden.

Figur 2 zeigt ein weiteres Ausführungsbeispiel eines Automatisierungssystems mit mehreren Bussystemen B1,B2,B3. Mit den ersten Bussystem B1 ist eine Hardwarekomponente H1 gekoppelt, die einen Motor M1 wie eine zugehörige Signalverarbeitungseinheit 5 enthält. Die Hardwarekomponente H1 ist darüber hinaus mit dem zweiten Bussystem B2 gekoppelt, welches mit einem Leitsystem 3 verbunden ist. Das Leitsystem 3 ist darüber hinaus mit dem dritten Bussystem B3 koppelbar. An das dritte Bussystem B3 ist ein Bedien- und Beobachtungssystem 6 sowie eine speicherprogrammierbare Steuerung 8 verbunden.

Die Hardwarekomponente H1, genauer gesagt die Systemverbindungseinheit 5 der Hardwarekomponente H1 mit zugehörigem Signalverarbeitungsmitteln ist in der Lage über das erste B1 und das zweite B2 Bussystem Kommunikationsdaten zu übertragen bzw. zu empfangen. Darüber hinaus bildet die Systemverbindungseinheit 5 auch eine Schnittstelle für einen Netzübergang zwischen dem ersten Bussystem B1 und dem zweiten Bussystem B2, beispielsweise für Kommunikationsdaten, die von einer mit dem Bussystem B1 gekoppelten Hardwarekomponente H2 an das Leitsystem 3 übertragen werden sollen. Hierzu weist die Systemverbindungseinheit 5 einen Speicher 9 zur Speicherung von für einen Netzübergang zwischen dem Bussystem B1 und dem Bussystem B2 erforderlichen Protokollen auf. So ist beispielsweise auf einfache Weise ein Netzübergang zwischen einem sogenannten Ethernet und einem sogenannten Profibus möglich. Die Hardwarekomponente H1 weist bei dem in Figur 2 dargestellten Ausführungsbeispiel neben dem Vorteil einer offenen und verteilten Kommunikation zwischen der Hardwarekomponente H1 und beispielsweise dem Leitsystem 3 auch den weiteren Vorteil einer Schnittstellenanpassung für weitere Hardwarekomponenten auf.

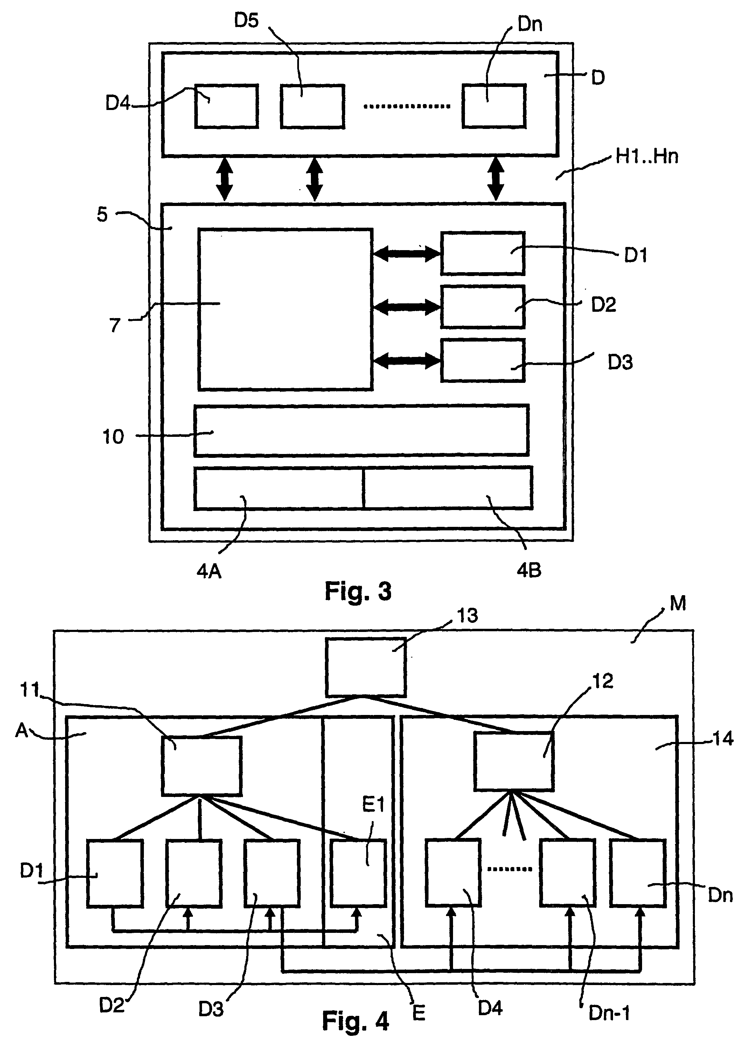

Figur 3 zeigt eine schematische Darstellung des Aufbaus einer Systemverbindungseinheit 5 einer Hardwarekomponente H1..Hn, wie sie beispielsweise im Zusammenhang mit dem in Figur 1 und Figur 2 dargestellten Ausführungsbeispielen zum Einsatz kommt. Die Signalverbindungseinheit 5 enthält Funktionsobjekte D1,D2,D3 sowie Betriebssystemkomponenten 4A,4B, ein Laufzeitsystem 7 (Runtime-System) sowie eine Protokollverarbeitungseinheit 10 (Profibus, UDP/IP, RPC). Die Hardwarekomponenten H1..Hn weist darüber hinaus weitere Datenobjekte D4..Dn auf, die als Datenobjekte D eines Anwenders eine zusätzliche Anwenderfunktionalität kennzeichnen.

Die Funktionsobjekte D1..D3 sind beispielsweise als sogenannte DCOM-Objekte (Distributed Component Object Model) bzw. als sogenannte OLE-Objekte (Object Linking and Embedding) ausgebildet. Das erste Funktionsobjekt D1 dient der Erzeugung einer minimalen Funktionalität einer Hardwarekomponente. Das zweite Funktionsobjekt D2 dient zur Verschaltung von Objekten, während das dritte Funktionsobjekt D3 zur Sammlung von in der Systemverbindungseinheit und/oder auf entfernten Systemverarbeitungseinheiten und/oder entfernten Rechnern vorhandenen Objekten vorgesehen ist. Das zweite Funktionsobjekt D2 benutzt das Laufzeitsystem 7, um Verbindungen herzustellen. Das Laufzeitsystem 7 baut auf dem Remote Procedure Call RPC-Protokoll auf und ist eine dem RPC-Protokoll überlagerte Verwaltungseinheit, die eine Sicht auf lokale oder entfernte Objekte bzw. Interfaces mit Hilfe der RPC-Protokolle herstellt. Das besondere der Laufzeitschnittstelle 7 ist es, daß die Schnittstelle asynchron ausgebildet ist, d.h. nach Rückkehr der entsprechenden Funktion liegen die Ergebnisse, die von einem entfernten System zu liefern sind, noch nicht vor. Der Aufrufer, d.h. der Auslöser des Remote Procedure Calls muß daher die Adresse einer Variablen an das Laufzeitsystem 7 übergeben. Das Laufzeitsystem 7 verändert beim Eintreffen der Ergebnisse oder einem vorgebbaren Time-out den Wert einer bestimmten Quittungskomponente. Hierdurch wird dem Aufrufer mitgeteilt, ob die Operation erfolgreich abgeschlossen wurde oder fehlschlug. Der Vorteil der Asynchronität der Funktionsschnittstelle des Laufzeitsystems des zweiten Datenobjekts D2 ist es, daß beispielsweise bei einer zyklischen speicherprogrammierbaren Steuerung mit einem strengen Zyklus der vorgegebene Zyklus eingehalten werden kann. Hierzu ruft das Anwenderprogramm in einem beliebigen Zyklus die Methode eines lokalen bzw. entfernten Objekts, während das Ergebnis des Aufrufs beispielsweise per Flag im nächsten Zyklus abgefragt wird.

Die Registrierung von Hardwarekomponenten H1..Hn erfolgt in der Weise, daß mit Hilfe einer bestimmten Funktion, d.h. eines Befehls ein Interface sichtbar im Laufzeitsystem 7 anmeldet. Das registrierte Interface ist danach für sogenannte "Clients" zugänglich. Künftige Aufrufe von derartigen Clients werden vom Laufzeitsystem 7 an die vorher übergebene Funktion weitergeleitet.

Die Systemverbindungseinheit 5 enthält Umsetzungsmittel zur Umsetzung zwischen Rechnerinformationsdaten und Daten auf einen Kommunikationsmedium. Dabei liegt die Verantwortung für eine derartige Umsetzung, d.h. für das sogenannte Marshaling beim jeweiligen Datenobjekt D1..Dn selbst. Die Datenobjekte D1..Dn müßten vor dem Aufruf einer entfernten Methode entsprechend der Parametersignatur der jeweiligen Methode einen Puffer mit Werten füllen, der den Codierungsvorschriften von beispielsweise RPC bzw. DCOM gerecht wird. Entsprechendes gilt für die Rückgabe der Out-Parameter, die Entgegennahme der In-Parameter und die Entgegennahme von Out-Parametern.

Das DCOM-Runtime-System 7 stellt Funktionen für das Marshaling einzelner Werte zur Verfügung.

Das DCOM-Runtime-System 7 stellt die Verbindungen zwischen Objekten auf unterschiedlichen Rechnern her. Für diese Aufgabe wird zum einen eine Liste von Interfaces verwaltet, die von lokalen Clients auf entfernten Rechnern beansprucht werden, sogenannte importierte Interfaces. Zum anderen werden Listen mit Interfaces verwaltet, die lokale Server für entfernte Clients zur Verfügung stellen, sogenannte exportierte Interfaces.

Figur 4 zeigt ein abstraktes Geräteobjektmodel M für alle an einem offenen verteilten Automatisierungssystem teilnehmenden Komponenten OVA-Komponenten 13 (OVA-Device = Offene Verteilte Automatisierung). Das Geräteobjektmodel M besteht im wesentlichen aus einem allgemeinen Gerät A, welches als Systemdefinition die über alle Geräte gleiche Funktionalität eines sogenannten OVA-Geräts (Offene Verteilte Automatisierung) beschreibt. Das allgemeine Gerät A wird durch die drei Funktionsobjekte D1, D2, D3 realisiert. Das allgemeine Gerät A enthält weiter ein erweitertes Gerät E beschreibt alle Dienste des Geräts, die eine bestimmte Geräteklasse, beispielsweise einen bestimmten Gerätetyp von speicherprogrammierbaren Steuerungen zusätzlich zum allgemeinen Objektmodell A anbieten. Es wird über ein Objekt E1 (Extented Device) beschrieben. Das Geräteobjektmodel M enthält weiter einen Bereich 14 für die einer OVA-Komponente 13 zugeordnete Anwenderfunktionalität. Die Anwenderfunktionalität der Automatisierungsobjekte 13 kann dabei über ein weiteres Objekt 12, beispielsweise über ein sogenanntes ACAO-Interfaces (Active Control Application Object) beschrieben werden. Über das ACAO-Interface bestehen Interfaces zu den Datenobjekten D4..Dn.

Das Objekt D1 (Common Device) stellt die allgemeine minimale Funktionalität eines Geräts zur Verfügung. Es hat eine für alle Geräte gleiche wohlbekannte Identifizierung und kann somit einen externen Kommunikationspartner auch ohne Kenntnis über das eigentliche Gerät angesprochen werden. Das Objekt D1 ist sozusagen Anker für alle weiteren Objekte des Geräts, d.h. die auf dem Gerät lebenden Objekte können über das Objekt D1 bestimmt werden. Das Objekt D2 (ACCO = Active Control Connection Object) realisiert die Verschaltung von Automatisierungsobjekten, während das Objekt D3 (RT Automation Object) Verweise auf die Automatisierungsobjekte des Geräts enthält. Die besondere Funktion des Funktionsobjekts D3 besteht darin, die Summe der Funktionalität des Systems zu enumerieren, d.h. zu erfragen. Das erweiterte Gerät E beschreibt alle Dienste des Geräts, die eine bestimmte Geräteklasse, beispielsweise einen bestimmten Gerätetyp von speicherprogrammierbaren Steuerungen zusätzlich zum allgemeinen Objektmodell A anbieten. Es wird über das Objekt Extented Device E1 beschrieben.

Das Geräteobjektmodell ist gemäß Figur 4 somit in einen Teil fester Funktionalität A sowie in einen Teil E mit variabler Funktionalität unterteilt. Die Funktionalität der Funktionsobjekte D2, D3 wird über das erste Funktionsobjekt D1 zugänglich gemacht, während vom Funktionsobjekt D3 die weiteren Funktionsobjekte D4,.., Dn erfragbar und zugänglich sind. Die Funktionalität der Automatisierungsobjekte kann dabei über das ACAO-Interface 12 (Active Control Application Object) beschrieben werden.

Zusammenfassend betrifft die Erfindung somit ein Automatisierungssystem 1 mit über mindestens ein Bussystem B1..B3 koppelbaren Hardwarekomponenten H1..Hn, insbesondere Motoren, Sensoren, Aktuatoren, etc.. Eine möglichst flexible und offene Betriebsweise des Automatisierungssystems kann dadurch erzielt werden, die jeweils eine Systemverbindungseinheit mit Funktionsobjekten als Abbild der realen Funktionalität der Hardwarekomponenten aufweisen, wobei die Funktionsobjekte zum Zugriff auf die Funktionalität der Hardwarekomponenten über das Bussystem vorgesehen sind. Die Funktionsobjekte sind als DCOM-Objekte ausgebildet, so daß eine Nutzung der aus der Bürowelt bekannten Mechanismen zur Ausführung von verteilten Anwendungen möglich wird.

## Patentansprüche

1. Automatisierungssystem (1) mit einer über mindestens ein Bussystem (B1..B3) koppelbaren Hardwarekomponenten (H1..Hn), wobei mindestens eine Hardwarekomponente (H1..Hn) eine Systemverbindungseinheit (5) aufweist, die
• ein minimales gemeinsames Interface mit einer für die Hardwarekomponenten (H1..Hn) vorgegebenen Identifizierung zur Kommunikation mit einem externen Kommunikationspartner (3, 6) und zur Weitergabe von weiterem Wissen über die jeweilige Hardwarekomponente (H1..Hn) durch die Systemverbindungseinheit (5) an den jeweiligen Kommunikationspartner (3, 6) der Hardwarekomponente (H1..Hn) nach Aufnahme einer Kommunikation mit dem externen Kommunikationspartner (3, 6) und
• mindestens ein auf Softwareobjekten beruhendes Funktionsobjekt (D1..Dn) als Abbild der realen Funktionalität der Hardwarekomponente (H1..Hn) aufweist, wobei die Funktionsobjekte (D1..Dn) zum Zugriff auf die Funktionalität der Hardwarekomponenten (H1..Hn) über das Bussystem (B1..B3) vorgesehen sind.

2. Automatisierungssystem nach Anspruch 1,
**dadurch gekennzeichnet,**
**daß** Hardwarekomponenten (H1..Hn) Motoren, Sensoren, Aktuatoren, etc. sind.

3. Automatisierungssystem nach einem der Ansprüche 1 oder 2,
**dadurch gekennzeichnet,**
**daß** das Automatisierungssystem ein Leitsystem (3) und/oder ein Bedien- und Beobachtungssystem (6) zum Zugriff auf die Funktionsobjekte (D1..Dn) aufweist.

4. Automatisierungssystem nach einem der Ansprüche 1 bis 3,
**dadurch gekennzeichnet,**
**daß** die Funktionsobjekte (D1..Dn) als DCOM-Objekte ausgebildet sind.

5. Automatisierungssystem nach einem der Ansprüche 1 bis 4,
**dadurch gekennzeichnet,**
**daß** die Funktionsobjekte (D1..D3) mindestens ein erstes Funktionsobjekt (D1) zur Erzeugung einer minimalen Funktionalität einer Hardwarekomponente (H1..Hn), mindestens ein zweites Funktionsobjekt (D2) zur Verschaltung von Funktionsobjekten und mindestens ein drittes Funktionsobjekt (D3) zur Sammlung von in der Systemverarbeitungseinheit (5) und/oder auf entfernten Systemverarbeitungseinheiten und/oder entfernten Rechnern vorhandenen Funktionsobjekten (D1..Dn) aufweisen.

6. Automatisierungssystem nach einem der Ansprüche 1 bis 5,
**dadurch gekennzeichnet,**
**daß** das zweite Funktionsobjekt (D2) zur Beeinflussung von Verbindungen zwischen den auf entfernten Systemverbindungseinheiten und/oder auf entfernten Rechnern vorhandenen Funktionsobjekten vorgesehen ist.

7. Automatisierungssystem nach einem der Ansprüche 1 bis 6,
**dadurch gekennzeichnet,**
**daß** durch das dritte Funktionsobjekt (D3) beim Zugriff auf die Systemverbindungseinheit (5) ein dynamisches Abfrageobjekt generiert wird.

8. Automatisierungssystem nach einem der Ansprüche 1 bis 7,
**dadurch gekennzeichnet,**
**daß** das Automatisierungssystem eine ladbare Tabelle mit Codierungsvorschriften aufweist.

9. Automatisierungssystem nach einem der Ansprüche 1 bis 8,
**dadurch gekennzeichnet,**
**daß** das Automatisierungssystem zum Zugriff auf die Funktionalität der Hardwarekomponenten ein Leitsystem und/oder eine Bedien- und Beobachtungssystem aufweist.

10. Verfahren zum Zugriff auf die Funktionalität von Hardwarekomponenten (H1..Hn) eines Automatisierungssystems (1), bei dem die Hardwarekomponenten (H1..Hn) innerhalb des Automatisierungssystems über mindestens ein Bussystem (B1..B3) gekoppelt sind, bei auf die Funktionalität der Hardwarekomponenten über das Bussystem mittels einer in der Hardwarekomponente integrierten Systemverbindungseinheit (5) mit Funktionsobjekten (D1..Dn) als Abbild der realen Hardwarefunktionen zugegriffen wird, bei dem über ein minimales gemeinsames Interface der Systemverbindungseinheit (5) mittels einer für die Hardwarekomponenten (H1..Hn) vorgegebenen Identifizierung eine Kommunikation mit einem externen Komnunikationspartner (3, 6) erfolgt und weiteres Wissen über die jeweilige Hardwarekomponente (H1..Hn) durch die Systemverbindungseinheit (5) an den jeweiligen Kommunikationspartner (3, 6) der Hardwarekomponente (H1..Hn) nach Aufnahme einer Kommunikation mit dem externen Kommunikationspartner (3, 6) weitergebbar ist und bei dem die Funktionsobjekte (D1..Dn) auf Softwareobjekten beruhen und zum Zugriff auf die Funktionalität der Hardwarekomponenten (H1..Hn) über das Bussystem (B1..B3) vorgesehen sind.

11. Verfahren nach Anspruch 10,
**dadurch gekennzeichnet,**
**daß** das Verfahren zum Zugriff auf die Funktionalität von als Motoren, Sensoren, Aktuatoren, etc. ausgebildeten Hardwarekomponenten (H1..Hn) vorgesehen sind.

12. Verfahren nach einem der Ansprüche 10 oder 11,
dadurch gekenn*z*eichnet,
daß in der Systemverbindungseinheit (5) über ein erstes Funktionsobjekt (D1) eine minimalen Funktionalität einer Hardwarekomponente (H1..Hn) erzeugt wird, daß über ein zweites Funktionsobjekt (D2) Funktionsobjekte (D1..Dn) miteinander verschaltet werden und daß über ein drittes Funktionsobjekt (D3) die in der Systemverarbeitungseinheit (5) und/oder auf entfernten Systemverarbeitungseinheiten und/oder auf entfernten Rechnern vorhandene Funktionsobjekte (D1..Dn) aufgelistet werden.

## Claims

1. An automation system (1) with hardware components (H1..Hn) that can be connected via at least one bus system (B1..B3), whereby at least one hardware component (H1..Hn) features a system connection unit which has
a minimum shared interface with a pre-specified identification for the hardware components (H1..Hn) for communication with an external communication partner (3, 6), and for passing on information about the relevant hardware components (H1..Hn) via the system connection unit (5) to the relevant communication partners (3, 6) of hardware components (H1...Hn) after establishing communication with the external communication partners (3, 6) and
at least one function object (D1..Dn) based on software objects as an image of the real functionality of the hardware components (H1..Hn), whereby the function objects (D1..Dn) are provided for access to the functionality of the hardware components (H1..Hn) via the bus system (B1..B3).

2. An automation system in accordance with claim 1, **characterized in that** hardware components (H1..Hn) are motors, sensors, actuators etc.

3. An automation system in accordance with claim 1 or 2, **characterized in that** the automation system is an administrative system (3) and/or an operating and monitoring system (6) for accessing the function objects (D1..Dn).

4. An automation system in accordance with one of the claims 1 to 3, **characterized in that** the function objects (D1..Dn) are designed as DCOM objects.

5. An automation system in accordance with one of the claims 1 to 4, **characterized in that** the function objects (D1..D3) features at least a first function object (D1) for producing a minimal functionality of a hardware component (H1..Hn), at least a second function object (D2) for connecting to other function objects, and at least a third function object (D3) for gathering function objects (D1...Dn) located in the system processing unit (5) and/or on remote system processing units and/or remote computers.

6. An automation system in accordance with one of the claims 1 to 5, **characterized in that** the second function object (D2) is provided for influencing connections between the function objects located on remote system processing units and/or remote computers.

7. An automation system in accordance with one of the claims 1 to 6, **characterized in that** a dynamic retrieval object is generated by the third function object (D3) when system connection unit (5) is accessed.

8. An automation system in accordance with one of the claims 1 to 7, **characterized in that** the automation system features a loadable table with encoding rules.

9. An automation system in accordance with one of the claims 1 to 8, **characterized in that** the automation system features an administrative system and/or an operating and monitoring system for accessing functionality of the hardware components.

10. A method for accessing the functionality of hardware components (H1..Hn) of an automation system (1), in which the hardware components (H1..Hn) are connected within the automation system via at least one bus system (B1..B3) in which access to the functionality of the hardware components via the bus system is by means of a system connection unit (5) integrated into the hardware components with function objects (D1..Dn) as an image of the real hardware functions in which communication with an external communication partner (3, 6) via a minimal common interface of system connection unit (5) using a pre-defined identification for the hardware components (H1..Hn) and further information about the hardware components (H1..Hn) can be passed on after establishing communication with an external communication partner (3, 6) and in which the function objects (D1..Dn) are based on software objects and are provided for access to the functionality of the hardware components (H1..Hn) via the bus system (B1..B3).

11. A method in accordance with claim 10, **characterized in that** the method is provided for accessing the functionality of hardware components (H1..Hn) designed as motors, sensors, actuators etc.

12. A method in accordance with claim 10 or 11, **characterized in that** in the system connection unit (5) via a first function object (D1) a minimal functionality of a hardware component (H1..Hn) is created that connects function objects (D1..Dn) together via a second function object (D2) and that via a third function object (D3) the function objects (D1..Dn) present in the system connection unit (5) and/or in remote system processing units and/or in remote computers are listed.

## Revendications

1. Système d'automatisation (1) avec des éléments matériels (H1 à Hn) pouvant être couplés par l'intermédiaire d'au moins un système de bus (B1 à B3), au moins un élément matériel (H1 à Hn) comportant une unité de liaison de système (5) qui comporte
• une interface commune minimale avec une identification prédéterminée pour les éléments matériels (H1 à Hn) en vue de la communication avec un partenaire de communication externe (3, 6) et en vue de la retransmission d'autres connaissances sur l'élément matériel respectif (H1 à Hn) au partenaire de communication respectif (3, 6) de l'élément matériel (H1 à Hn) par l'unité de liaison de système (5) après acceptation d'une communication avec le partenaire de communication externe (3, 6), et
• au moins un objet fonctionnel (D1 à Dn) reposant sur des objets logiciels comme reproduction de la fonctionnalité réelle de l'élément matériel (H1 à Hn), les objets fonctionnels (D1 à Dn) étant prévus pour accéder à la fonctionnalité des éléments matériels (H1 à Hn) par l'intermédiaire du système de bus (B1 à B3).

2. Système d'automatisation selon la revendication 1, **caractérisé par le fait que** des éléments matériels (H1 à Hn) sont des moteurs, des capteurs, des actionneurs, etc..

3. Système d'automatisation selon l'une des revendications 1 ou 2, **caractérisé par le fait que** le système d'automatisation comporte un système de contrôle (3) et/ou un système de commande et d'observation (6) pour accéder aux objets fonctionnels (D1 à Dn).

4. Système d'automatisation selon l'une des revendications 1 à 3, **caractérisé par le fait que** les objets fonctionnels (D1 à Dn) sont conçus comme des objets DCOM.

5. Système d'automatisation selon l'une des revendications 1 à 4, **caractérisé par le fait que** les objets fonctionnels (D1 à D3) comportent au moins un premier objet fonctionnel (D1) pour la production d'une fonctionnalité minimale d'un élément matériel (H1 à Hn), au moins un deuxième objet fonctionnel (D2) pour la connexion d'objets fonctionnels et au moins un troisième objet fonctionnel (D3) pour la collecte d'objets fonctionnels (D1 à Dn) présents dans l'unité de traitement de système (5) et/ou sur des unités de traitement de système distantes et/ou sur des ordinateurs distants.

6. Système d'automatisation selon l'une des revendications 1 à 5, **caractérisé par le fait que** le deuxième objet fonctionnel (D2) est prévu pour influencer des liaisons entre les objets fonctionnels présents sur des unités de liaison de système distantes et/ou sur des ordinateurs distants.

7. Système d'automatisation selon l'une des revendications 1 à 6, **caractérisé par le fait qu'**un objet d'interrogation dynamique est produit par le troisième objet fonctionnel (D3) lors de l'accès à l'unité de liaison de système (5).

8. Système d'automatisation selon l'une des revendications 1 à 7, **caractérisé par le fait que** le système d'automatisation comporte un tableau chargeable avec des règles de codage.

9. Système d'automatisation selon l'une des revendications 1 à 8, **caractérisé par le fait que** le système d'automatisation comporte un système de contrôle et/ou un système de commande et d'observation pour accéder à la fonctionnalité des éléments matériels.

10. Procédé d'accès à la fonctionnalité d'éléments matériels (H1 à Hn) d'un système d'automatisation (1), dans lequel les éléments matériels (H1 à Hn) à l'intérieur du système d'automatisation sont couplés par l'intermédiaire d'au moins un système de bus (B1 à B3), dans lequel on accède à la fonctionnalité des éléments matériels par l'intermédiaire du système de bus au moyen d'une unité de liaison de système (5) intégrée dans l'élément matériel et ayant des objets fonctionnels (D1 à Dn) comme reproduction des fonctions matérielles réelles, dans lequel une communication avec un partenaire de communication externe (3, 6) s'effectue par l'intermédiaire d'une interface commune minimale de l'unité de liaison de système (5) au moyen d'une identification prédéterminée pour les éléments matériels (H1 à Hn) et d'autres connaissances sur l'élément matériel respectif (H1 à Hn) peuvent être retransmises par l'unité de liaison de système (5) au partenaire de communication respectif (3, 6) de l'élément matériel (H1 à Hn) après acceptation d'une communication avec le partenaire de communication respectif (3, 6) et dans lequel les objets fonctionnels (D1 à Dn) reposent sur des objets logiciels et sont prévus pour accéder à la fonctionnalité des éléments matériels (H1 à Hn) par l'intermédiaire du système de bus (B1 à B3).

11. Procédé selon la revendication 10, **caractérisé par le fait que** le procédé est prévu pour accéder à la fonctionnalité d'éléments matériels (H1 à Hn) conçus comme des moteurs, des capteurs, des actionneurs, etc..

12. Procédé selon l'une des revendications 10 ou 11, **caractérisé par le fait qu'**on produit dans l'unité de liaison de système (5) par l'intermédiaire d'un premier objet fonctionnel (D1) une fonctionnalité minimale d'un élément matériel (H1 à Hn), qu'on connecte entre eux des objets fonctionnels (D1 à Dn) par l'intermédiaire d'un deuxième objet fonctionnel (D2) et qu'on énumère par l'intermédiaire d'un troisième objet fonctionnel (D3) les objets fonctionnels (D1 à Dn) présents dans l'unité de traitement de système (5) et/ou sur des unités de traitement de système distantes et/ou sur des ordinateurs distants.
